# EUROPEAN PATENT APPLICATION

(11) **EP 3 761 163 A1**
(43) Date of publication of application: **06.01.2021**
(21) Application number: 19184633.6
(22) Date of filing: 05.07.2019
(51) Int. Cl.: G06F 3/14, G09G 3/20

(54) **METHOD OF OPERATING A DISPLAY SYSTEM HAVING A PLURALITY OF DISPLAY UNITS, AND DISPLAY SYSTEM**

(71) Applicant: Vestel Elektronik Sanayi ve Ticaret A.S., 45030 Manisa (TR)
(72) Inventor: YILMAZLAR, Ismail, 45030 Manisa (TR)
(74) Representative: Maikowski & Ninnemann Patentanwälte Partnerschaft mbB

(57) **Abstract**

The present disclosure relates to a method of operating a display system having a total number N of display units connected in series, wherein N ≥ 2, the method comprising: determining a display unit of the series of display units which has no other display unit connected to an output port thereof as a last display unit of the series; sequentially transmitting first messages from the last display unit along the series towards a first display unit of the series and determining a display unit of the series which has no other display unit of the series connected to an input port thereof as the first display unit; determining, by the first display unit, the total number N of display units based on the first messages; sequentially transmitting second messages from the first display unit along the series towards the last display unit; and determining a position of each of the display units in the series based on the second messages.

## Description

### FIELD

Embodiments of the present disclosure relate to a method of operating a display system having a total number N of display units connected in series, and relates to a display system having a total number N of display units connected in series. The present disclosure relates in particular to a video wall system which can automatically determine a position of each of the individual display units of the video wall.

### BACKGROUND

Nowadays there is an increasing demand for large screens, in particular in public areas. However, such large screens cannot be manufactured using LCD technology presently available. Therefore, smaller screens are connected to each other to create a larger screen, which is also known as a video wall. Generally, a video wall is a multi-screen setup that is comprised of a plurality of screens tiled together in order to form a single large screen. The video wall can be configured according to an aspect ratio, such as 16:9. A picture is upscaled according to the positions of the individual screens.

For setting up the video wall, each individual screen is adjusted manually by a service person to define a position in the video wall structure. In particular, each screen needs to know a position thereof to upscale the required part of the picture. The manual adjustment and configuration of the screen positions is, however, cumbersome and time consuming.

In view of the above, new methods of operating a display system having display units connected in series and display systems having display units connected in series that overcome at least some of the problems in the art are beneficial.

### SUMMARY

In light of the above, a method of operating a display system having display units connected in series and a display system having display units connected in series are provided.

It is an object of the present disclosure to automatically determine a position of each of individual display units of a display system, such as a video wall. Further objects, aspects, benefits, and features of the present disclosure are apparent from the claims, the description, and the accompanying drawings.

According to an independent aspect of the present disclosure, a method of operating a display system having a total number *N* of display units connected in series, wherein *N* ≥ 2, is provided. The method includes determining a display unit of the series of display units which has no other display unit connected to an output port thereof as a last display unit of the series; sequentially transmitting first messages from the last display unit along the series towards a first display unit of the series and determining a display unit of the series which has no other display unit of the series connected to an input port thereof as the first display unit; determining, by the first display unit, the total number N of display units based on the first messages; sequentially transmitting second messages from the first display unit along the series towards the last display unit; and determining a position of each of the display units in the series based on the second messages.

According to another independent aspect of the present disclosure, a display system, such as a video wall, is provided. The display system includes a plurality of display units connected in series, the plurality of display units including a total number *N* of display units, wherein *N* ≥ 2, and one or more processors. The one or more processors are configured to determine a display unit of the series of display units which has no other display unit connected to an output port thereof as a last display unit of the series; sequentially transmit first messages from the last display unit along the series towards a first display unit of the series and determine a display unit of the series which has no other display unit of the series connected to an input port thereof as the first display unit; determine the total number N of display units based on the first messages; sequentially transmit second messages from the first display unit along the series towards the last display unit; and determine a position of each of the display units in the series based on the second messages.

Embodiments are also directed at devices for carrying out the disclosed methods and include device parts for performing each described method aspect. These method aspects may be performed by way of hardware components, a computer programmed by appropriate software, by any combination of the two or in any other manner. Furthermore, embodiments according to the disclosure are also directed at methods for operating the described system. The methods include method aspects for carrying out every function of the system.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a schematic view of a display system having a plurality of display units connected in series according to embodiments described herein;
- FIG. 2: shows a flowchart of a method of operating a display system having a plurality of display units connected in series according to embodiments described herein; and
- FIG. 3: shows a schematic view of a display system having a plurality of display units connected in series according to further embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

A video wall is a multi-screen setup that is comprised of a plurality of screens tiled together in order to form a single large screen. For setting up the video wall, each individual screen can be adjusted manually by a service person to define a position in the video wall structure. In particular, each screen needs to know a position thereof to upscale the required part of the picture. The manual adjustment and configuration of the screen positions is, however, cumbersome and time consuming.

The present disclosure overcomes these drawbacks by providing an automatic determination and adjustment of the screen positions in the display system, such as a video wall. In particular, first the last display unit and the first display unit are determined based on their connections to other display units (or connections which are not present). The total number of display units is determined using first messages sequentially transmitted along the series of display units between the last display unit and the first display unit.

Then the relative positions of the display units in the series are determined by counting along the series of display units using second messages sequentially transmitted from the first display unit to the last display unit. In particular, it is determined that the first display unit is the first display unit of the N display units, that the second display unit which is connected to the first display unit and which receives a message from the first display unit is the second display unit of the *N* display units, that the third display unit which is connected to the second display unit and which receives a message from the second display unit is the third display unit of the N display units, and so on until the last display unit is reached.

Thereby, a relative position of each of the individual display units of the display system, such as a video wall, can be determined automatically rather than manually by a service person, thereby improving a user convenience.

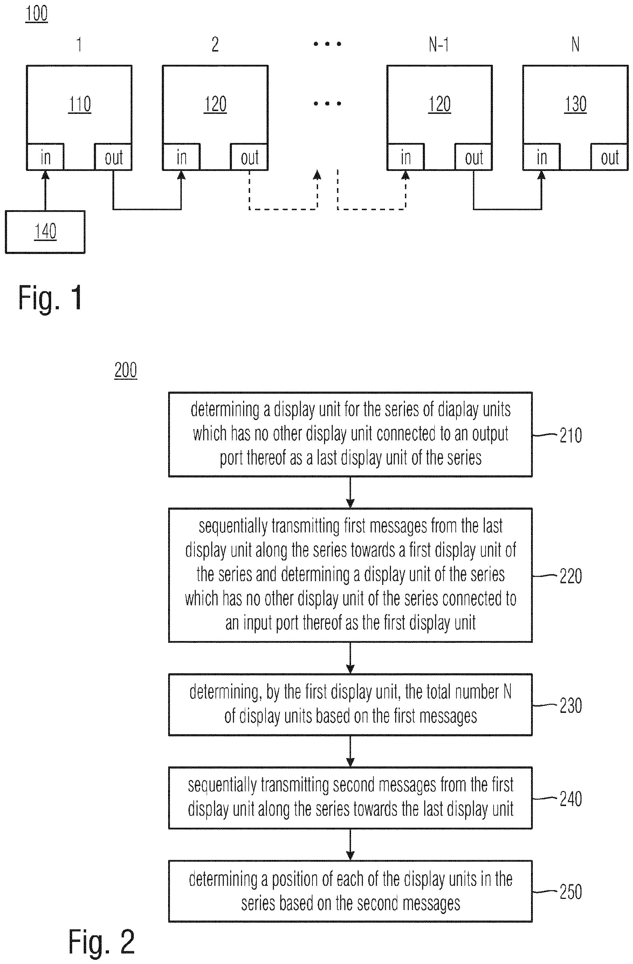

Figure 1 shows a schematic view of a display system 100 having a plurality of display units according to embodiments described herein. Figure 2 shows a flowchart of a method 200 of operating the display system 100 according to embodiments described herein.

The display system 100 includes a plurality of display units connected in series. The display units can also be referred to as "screens". The display units can be LCD displays, OLED displays, plasma displays, and the like. In a preferred embodiment, the display units are LCD displays.

The plurality of display units includes a total number *N* of display units. *N* is a positive integer equal to, or larger than, two (2). The series has a first display unit 110 ("display unit 1") and a last display unit 130 ("display unit N"). In some embodiments, one or more further display units 120 are provided between the first display unit 110 and the last display unit 130. Accordingly, the series of display units is defined between the first display unit 110, which is a start of the series, and the last display unit 130, which is an end of the series.

Each display unit of the series includes an input port ("in") and an output port ("out"). According to some embodiments, the input port and/or the output port of each of the display units of the series can be a High Definition Multimedia Interface, HDMI, port.

The input ports and/or the output ports can be configured for bi-directional communication. For example, a display unit can send a message to a display unit connected to its input port and receive e.g. a message reception acknowledgement from the display unit connected to its input port. Likewise, a display unit can send a message to a display unit connected to its output port and receive e.g. a message reception acknowledgement from the display unit connected to its output port.

In some implementations, communication and data transmission via the input ports and output ports can be based on a Consumer Electronics Control, CEC, communication.

As is shown in figure 1, an input port of a display unit is connected to an output port of a display unit preceding said display unit and an output port of a display unit is connected to an input port of a display unit succeeding said display unit to form the series of display units. Exceptions are the first display unit 110 and the last display unit 130.

In particular, although the output port of the first display unit 110 is connected to an input port of a display unit succeeding the first display unit 110 in the series, the input port of the first display unit 100 is not connected to another display unit of the series. According to some embodiments, the input port of the first display unit 100 can be connected to a host device 140. The host device 140 can be configured to provide image data or video data to the display system 100. For example, the host device 140 can be a video player.

Further, although the input port of the last display unit 130 is connected to an output port of a display unit preceding the last display unit 130 in the series, the output port of the last display unit 130 is not connected to another display unit of the series. In some embodiments, the output port of the last display unit 130 is unconnected, i.e., the output port of the last display unit 130 is not connected to another device. For example, the output port of the last display unit 130 can be in a floating state.

Reference is now made to figure 2 and the method 200 which can automatically determine a position of the individual display units in the series such that the display system can correctly display enlarged images or videos.

In block 210, a display unit of the series of display units is determined which has no other display unit connected to an output port thereof as the last display unit 130 of the series of display units. For example, the input ports and output ports of the display units can be HDMI ports which have port detection capabilities. In particular, HDMI ports can be configured to detect whether a device or cable is connected thereto. Thus, the last display unit can determine that it is the last one in the series because it has no other display unit of the series connected to the output port thereof.

In block 220, the method 200 includes sequentially transmitting first messages from the last display unit 130 along the series towards the first display unit 110 of the series and determining a display unit of the series which has no other display unit of the series connected to an input port thereof as the first display unit 110. In particular, each display unit can send a respective first message to the display unit preceding said display unit in the series.

In some embodiments, each display unit of the series transmits a respective first message via its input port, which can be configured for bi-directional data transfer. Except for the first display unit 110, each display unit of the series has another display unit connected to its input port, which other display unit can provide a message reception acknowledgement to the display unit which has sent the first message.

The first display unit 110 may send a first message to the host device 140 via the input port of the first display unit 110. The first display unit 110 may not receive a message reception acknowledgement or other feedback from the host device 140. Thus, the first display unit 110 can determine that it is the first display unit 110.

In block 230, the method 200 includes a determining, e.g. by the first display unit 110, of the total number N of display units based on the first messages. In some embodiments, the first messages may include a first counter to count the total number N of display units starting from the last display unit 130. For example, the first message sent by the last display unit 130 may include a counter "1", the first message sent by the display unit preceding the last display unit 130 may include a counter "2", and so on.

The first display unit 110 knows that it is the first display unit in the series (e.g. based on the missing feedback from the host device 140) and may thus determine the total number *N* of display units in the series based on the first counter in the first message received from the display unit succeeding the first display unit 110.

In block 240, the method 200 includes sequentially transmitting second messages from the first display unit 110 along the series towards the last display unit 130. In some embodiments, each display unit except the last display unit 130 transmits a respective second message to the display unit connected to its output port. In particular, each display unit can send a respective second message to the display unit succeeding said display unit in the series. According to some embodiments, each display unit of the series transmits a respective second message via its output port, which can be configured for bi-directional data transfer.

In block 250, the method 200 includes determining a relative position of each of the display units in the series based on the second messages. According to some embodiments, the second messages each include a second counter and the total number *N* of display units. Each display unit may determine a position thereof in the series based on the second counter and the total number N of display units included in the second messages.

For example, the first display unit 110 determines that it is the first display unit of a total number N of display units (i.e., (1, N)). The first display unit 110 may send a second message to the display unit connected to the output port thereof, i.e., the second display unit, which can determine that it is (2, N) based on the received second message. The second display unit may send a second message to the display unit connected to the output port thereof, i.e., the third display unit, which can determine that it is (3, N) based on the received second message. This is continued until the last display unit 130 is reached, i.e., (N, N). Accordingly, a relative position of each of the display units within the series can be determined.

According to some embodiments, which can be combined with other embodiments described herein, the display system 100 includes one or more processors configured to implement the method 200 described above. For example, each display unit can include a respective processor configured to implement the corresponding method aspects, such as the generation and transmission of the first messages and second messages, the determining of the position in the series based on the messages, and the like.

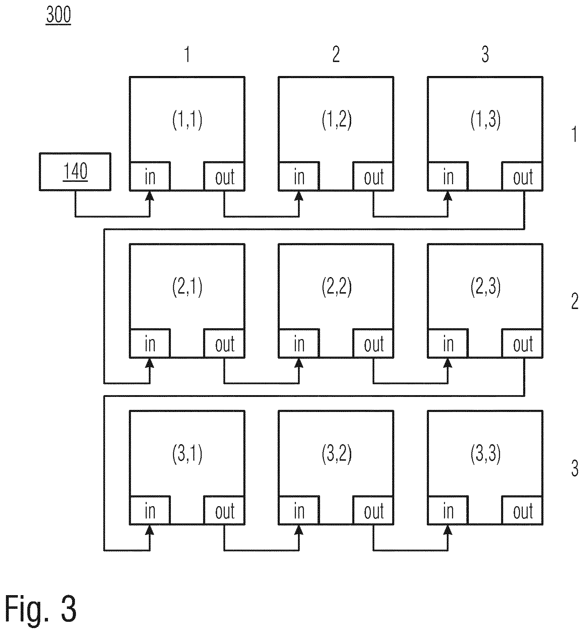

Figure 3 shows a schematic view of a display system 300 having a plurality of display units according to further embodiments described herein.

According to some embodiments, which can be combined with other embodiments described herein, the display units of the display system 300 are arranged in a *m x n* matrix having *m* rows and *n* columns. The determining of a position of each of the display units in the series based on the second messages described with reference to figures 1 and 2 may then include a determining of a position of each of the display units in the *m* x *n* matrix.

In the example of figure 3, a 3x3 setup is shown. The last display unit sends a first message to a previous display unit. This messaging is sequentially continued until the first display unit is reached. The first display unit learns that there is a total number of 9 display units. Thus, the first display unit determines or learns that it is number (1, 9), i.e. the first of nine, corresponding to a position in the first row and the first column in the 3x3 configuration.

Then, the first display unit sends a second message to the second display unit. The second message may include an identifier of the first display unit. The identifier may include a counter and the total number *N* of display units, and may be in the form of (1, 9) for the first display unit. Thus, the second display unit determines or learns that it is number (2, 9), i.e. the second of nine, corresponding to a position in the first row and the second column in the 3x3 configuration.

Then, the second display unit sends a second message to the third display unit. The second message may include an identifier of the second display unit, such as (2, 9). Thus, the third display unit determines or learns that it is number (3, 9), i.e. the third of nine, corresponding to a position in the first row and the third column in the 3x3 configuration.

Then, the third display unit sends a second message to the fourth display unit. The second message may include an identifier of the third display unit, such as (3, 9). Thus, the fourth display unit determines or learns that it is number (4, 9), i.e. the fourth of nine, corresponding to a position in the second row and the first column in the 3x3 configuration.

Then, the fourth display unit sends a second message to the fifth display unit. The second message may include an identifier of the fourth display unit, such as (4, 9). Thus, the fifth display unit determines or learns that it is number (5, 9), i.e. the fifth of nine, corresponding to a position in the second row and the second column in the 3x3 configuration.

Then, the fifth display unit sends a second message to the sixth display unit. The second message may include an identifier of the fifth display unit, such as (5, 9). Thus, the sixth display unit determines or learns that it is number (6, 9), i.e. the sixth of nine, corresponding to a position in the second row and the third column in the 3x3 configuration.

Then, the sixth display unit sends a second message to the seventh display unit. The second message may include an identifier of the sixth display unit, such as (6, 9). Thus, the seventh display unit determines or learns that it is number (7, 9), i.e. the seventh of nine, corresponding to a position in the third row and the first column in the 3x3 configuration.

Then, the seventh display unit sends a second message to the eighth display unit. The second message may include an identifier of the seventh display unit, such as (7, 9). Thus, the eighth display unit determines or learns that it is number (8, 9), i.e. the eighth of nine, corresponding to a position in the third row and the second column in the 3x3 configuration.

Then, the eighth display unit sends a second message to the ninth display unit. The second message may include an identifier of the eighth display unit, such as (8, 9). Thus, the ninth display unit determines or learns that it is number (9, 9), i.e. the ninth of nine, corresponding to a position in the third row and the third column in the 3x3 configuration.

Thereby, all of the screen positions are identified and the display units can select respective parts of the input picture and upscale it accordingly.

The present disclosure provides an automatic determination and adjustment of the screen positions in the display system, such as a video wall. In particular, first the last display unit and the first display unit are determined based on their connections to other display units (or connections which are not present). The total number of display units is determined using first messages sequentially transmitted along the series of display units between the last display unit and the first display unit.

Then the relative positions of the display units in the series are determined by counting along the series of display units using second messages sequentially transmitted from the first display unit to the last display unit. In particular, it is determined that the first display unit is the first display unit of the N display units, that the second display unit which is connected to the first display unit and which receives a message from the first display unit is the second display unit of the *N* display units, that the third display unit which is connected to the second display unit and which receives a message from the second display unit is the third display unit of the N display units, and so on until the last display unit is reached.

Thereby, a relative position of each of the individual display units of the display system, such as a video wall, can be determined automatically rather than manually by a service person, thereby improving a user convenience

While the foregoing is directed to embodiments of the disclosure, other and further embodiments of the disclosure may be devised without departing from the basic scope thereof, and the scope thereof is determined by the claims that follow.

## Claims

1. A method (200) of operating a display system (100, 300) having a total number *N* of display units connected in series, wherein *N* ≥ 2, the method (200) comprising:
determining (210) a display unit of the series of display units which has no other display unit connected to an output port thereof as a last display unit (130) of the series;
sequentially (220) transmitting first messages from the last display unit (130) along the series towards a first display unit (110) of the series and determining a display unit of the series which has no other display unit of the series connected to an input port thereof as the first display unit (110);
determining (230), by the first display unit (110), the total number N of display units based on the first messages;
sequentially (240) transmitting second messages from the first display unit (110) along the series towards the last display unit (130); and
determining (250) a position of each of the display units in the series based on the second messages.

2. The method (200) of claim 1, wherein each display unit transmits a respective first message via its input port.

3. The method (200) of claim 1 or 2, wherein the first messages include a first counter to count the total number N of display units in the series.

4. The method (200) of any one of claims 1 to 3, wherein each display unit of the series except the last display unit (130) transmits a respective second message to the display unit connected to its output port.

5. The method (200) of claim 4, wherein the second messages each include a second counter and the total number N of display units.

6. The method (200) of claim 5, wherein each display unit determines a position thereof in the series based on the second counter and the total number N of display units included in the second messages.

7. The method (200) of any one of claims 1 to 6, wherein the display units of the display system (300) are arranged in a *m* x *n* matrix having *m* rows and *n* columns.

8. The method (200) of claim 7, wherein the determining of a position of each of the display units in the series based on the second messages comprises:
determining a position of each of the display units in the *m* x *n* matrix.

9. The method (200) of any one of claims 1 to 8, wherein the first messages and the second messages are transmitted using Consumer Electronics Control, CEC, communication.

10. The method (200) of any one of claims 1 to 9, wherein the input port and the output port of each of the display units of the series are High Definition Multimedia Interface, HDMI, ports.

11. Display system (100, 300), comprising:
a plurality of display units connected in series, the plurality of display units including a total number *N* of display units, wherein *N* ≥ 2;
one or more processors configured to:
determine a display unit of the series of display units which has no other display unit connected to an output port thereof as a last display unit (130) of the series;
sequentially transmit first messages from the last display unit (130) along the series towards a first display unit (110) of the series and determine a display unit of the series which has no other display unit of the series connected to an input port thereof as the first display unit (110);
determine the total number *N* of display units based on the first messages;
sequentially transmit second messages from the first display unit (110) along the series towards the last display unit (130); and
determine a position of each of the display units in the series based on the second messages.

12. The display system (100, 300) of claim 11, wherein the input port and the output port of each of the display units of the series are High Definition Multimedia Interface, HDMI, ports.

13. The display system (300) of claim 11 or 12, wherein the display units are arranged in a *m* x *n* matrix having *m* rows and *n* columns.

14. The display system (100, 300) of any one of claims 11 to 13, further comprising a host device (140) connected to the input port of the first display unit (110).

15. The display system (100, 130) of any one of claims 11 to 14, wherein the one or more processors are configured to implement the method (200) according to any one of claims 1 to 10.
